# EUROPÄISCHE PATENTSCHRIFT

(11) **EP 1 972 921 B1**
(45) Veröffentlichungstag und Bekanntmachung des Hinweises auf die Patenterteilung: **31.12.2014**
(21) Anmeldenummer: 07008663.2
(22) Anmeldetag: 27.04.2007
(51) Int. Cl.: G01N 15/02, G01N 15/00

(54) **Vorrichtung und Verfahren zur Bestimmung von Partikelgröße und/oder Partikelform eines Partikelgemisches**
Device and method for determining size and/or shape of particles of a particle mixture
Dispositif et procédure de détermination de la taille et/ou forme de particules d'un mélange de particules

(30) Priorität: 20.03.2007 DE 102007013321
(43) Veröffentlichungstag der Anmeldung: 24.09.2008
(73) Patentinhaber: JENOPTIK Optical Systems GmbH, 07745 Jena (DE)
(72) Erfinder: Seifert, Rüdiger, 07749 Jena (DE); Gärtner, Ernst, Dipl.-Math., 07747 Jena (DE); Reichel, Frank, Dr., 07751 Oelknitz (DE); Dammann, Erhard, 07749 Jena (DE)
(74) Vertreter: Geyer, Fehners & Partner

(56) Entgegenhaltungen:
- EP-A- 1 273 901
- WO-A-02/11065
- DE-C1- 19 802 141
- FR-A- 2 778 243
- FR-A1- 2 753 531
- US-A1- 2002 159 060
- US-A1- 2007 010 974

## Beschreibung

Die vorliegende Erfindung betrifft eine Vorrichtung und ein Verfahren zur Bestimmung von Partikelgröße und/oder Partikelform eines Partikelgemisches gemäß dem Oberbegriff des Anspruchs 1 sowie ein Verfahren zur Bestimmung von Partikelgröße und/oder Partikelform eines Partikelgemisches nach dem Oberbegriff des Anspruchs 7.

Ein solches Verfahren und eine solche Vorrichtung zur Bestimmung von Partikelgröße und/oder Partikelform eines Partikelgemisches sind aus der DE 198 02 141 C1 bekannt. Bei einer solchen Vorrichtung werden zumindest zwei Kameras mit unterschiedlichen Vergrößerungen zur Aufnahme vorgesehen, um den Dynamikbereich der Messung (der Bereich der meßbaren Partikelgrößen) zu erhöhen. Es hat sich jedoch gezeigt, daß selbst bei Vorsehen von mehreren Kameras sich der Dynamikbereich der Messung nicht beliebig erhöhen kann. Insbesondere ist es schwierig, die untere Grenze (also die kleinste noch meßbare Partikelgröße) weiter nach unten zu schieben.

US 20020159060 A1 betrifft eine Vorrichtung zur Bestimmung der Größe von Wassertröpfchen. Diese Einrichtung enthält eine Messzone, Beleuchtungsinstrumente und Instrumente zur Bildaufnahme, die mit einer Kamera ausgestaltet sind, die geeignet ist, ein Bild von der beleuchteten Messzone anzufertigen. Objektivoptiken werden reguliert, um jeweils eine an die Beobachtung von kleinen Tröpfchen angepasste Vergrößerung von 3 herbeizuführen, sowie eine Vergrößerung von 0,66, die geeignet ist, große Tröpfchen zu beobachten.

Ausgehend hiervon ist es Aufgabe der Erfindung, eine Vorrichtung der eingangs genannten Art so weiterzubilden, daß der Dynamikbereich der Messung verbessert werden kann. Insbesondere soll die untere Grenze zur Messung von noch kleineren Partikeln verschoben werden. Ferner soll ein entsprechendes Verfahren zur Bestimmung von Partikelgröße und/oder Partikelform eines Partikelgemisches bereitgestellt werden.

Erfindungsgemäß wird die Aufgabe bei einer Vorrichtung der eingangs genannten Art dadurch gelöst, daß das Beleuchtungsmodul so ausgebildet ist, daß es zwei Bereiche mit unterschiedlichen Intensitäten beleuchtet, wobei der kleinere Bereich mit größerer Intensität beleuchtet wird als der größere Bereich. Damit ist es möglich, für jeden Bereich die optimale Intensität einzustellen (insbesondere je nach Vergrößerung durch die Kameras und/oder Apertur des Objektives der jeweiligen Kamera), so daß die Aufnahmen beider Bereiche auswertbar sind.

Damit kann sichergestellt werden, daß die Intensität bzw. Lichtmenge für die Aufnahme ausreicht. Insbesondere ist es dann z.B. möglich noch 30 Aufnahmen pro Sekunde mit einer Belichtungszeit von ca. 100 - 200 ns zu realisieren. Damit kann selbst bei Partikelstromgeschwindigkeiten von bis zu 50 m/s die gewünschte Bestimmung von Partikelgröße und/oder Partikelform durchgeführt werden.

Das Beleuchtungsmodul kann für jeden zu beleuchtenden Bereich eine separate Strahlungsquelle aufweisen. Für die Beleuchtung des flächenhaft kleineren Bereiches kann eine oberflächenemittierende Laserdiode eingesetzt werden. Solche Laserdioden liefern die notwendige Intensität.

Die oberflächenemittierende Laserdiode kann aus einem Array von mehreren Einzeldioden (z.B. 19) bestehen, deren ausgesandte Strahlungen sich durchmischen und als Beleuchtungsstrahlung für den kleineren Bereich verwendet werden. Durch diese Durchmischung der Strahlungen der Einzeldioden können Speckle und sonstige unerwünschte Kohärenzeffekte verringert werden, so daß der kleinere Bereich mit der gewünschten hohen Intensität gleichmäßig beleuchtet werden kann. Zur Durchmischung der Strahlung der Einzeldioden kann eine geeignete Optik vorgesehen sein.

Einer solchen Strahlungsquelle kann eine Homogenisiereinrichtung nachgeordnet werden, um eine möglichst gleichmäßige Beleuchtung des kleineren Bereiches zu realisieren. Die Homogenisiereinrichtung kann beispielsweise als Lichtleitkabel einer vorbestimmten Länge verwirklicht werden. Ferner kann die Strahlungsquelle noch eine Fokussieroptik aufweisen, um möglichst die gesamte Laserstrahlung in den zu beleuchtenden Bereich zu fokussieren.

Das Beleuchtungsmodul kann die beiden Bereiche bevorzugt mit gepulster Beleuchtungsstrahlung beleuchten. Dabei können beide Bereiche gleichzeitig beleuchtet werden, es ist jedoch möglich, sie abwechselnd zu beleuchten.

Durch die gepulste Beleuchtung können sehr kurze Belichtungszeiten realisiert werden.

Das Beleuchtungsmodul kann jeden der Bereiche jeweils gleichmäßig (also mit möglichst geringer Änderung der Intensität über den Ort) beleuchten.

Zumindest eine der Kameras kann ein telezentrisches Objektiv aufweisen. Durch den Einsatz eines solchen telezentrischen Objektives wird der Vorteil erreicht, daß über den Tiefenschärfebereich hinaus (innerhalb des sogenannten Telezentriebereiches, der an den Tiefenschärfebereich anschließt) die Partikelgröße mit ausreichender Genauigkeit bestimmt werden kann. Der Telezentriebereich ist häufig um den Faktor 2 bis 10 größer als der Tiefenschärfebereich, so daß die Meßgenauigkeit erhöht werden kann, da das Meßvolumen aufgrund des Telezentriebereiches über den Tiefenschärfebereich hinaus erweitert wird und somit mehr Partikel detektiert und statistisch ausgewertet werden können.

Der Partikelstrom läuft bevorzugt quer zur Aufnahmerichtung der Kameras. Die Aufnahmerichtung der Kameras kann zusammenfallen oder sie kann z.B. in Draufsicht und in Seitenansicht gesehen jeweils einen Winkel von 5-20° einschließen. Bei einer solchen Ausbildung ist es möglich, die Kameras räumlich sehr kompakt anzuordnen.

Ferner kann das Beleuchtungsmodul so ausgebildet sein, daß die Beleuchtungsrichtungen zur Beleuchtung der beiden Bereiche in Draufsicht und in Seitenansicht gesehen jeweils einen Winkel von 5 - 20° einschließen.

Die Kameras können als Digitalkameras mit einem zweidimensionalen Bildsensor ausgebildet sein. Der Bildsensor kann ein CCD-Bildsensor oder auch ein CMOS-Bildsensor sein.

Das Beleuchtungsmodul kann eine Durchlicht- und/oder Auflichtbeleuchtung realisieren.

Die Aufgabe wird ferner bei einem Verfahren zur Bestimmung von Partikelgröße und/oder Partikelform eines Partikelgemisches der eingangs genannten Art dadurch gelöst, daß die beiden Bereiche mit unterschiedlichen Intensitäten beleuchtet werden. Dadurch ist es möglich, für jeden Bereich die optimale Beleuchtungsintensität zur Verfügung zu stellen, z.B. je nach Vergrößerung durch die entsprechende Kamera, wobei der Bereich, der mit höherer Vergrößerung aufgenommen wird, mit höherer Intensität beleuchtet werden kann.

Insbesondere kann der flächenhaft kleinere der beiden Bereiche mit höherer Intensität beleucht werden. Der kleinere Bereich wird in der Regel mit der höheren Vergrößerung (und größerer Apertur) aufgenommen. Somit kann die Beleuchtungsintensität des Objektfeldes bzw. des entsprechenden Bereiches an die entsprechende Vergrößerung bzw. Apertur angepaßt werden.

Das Verhältnis der Intensitäten zur Beleuchtung der beiden Bereiche kann dabei entsprechend dem Verhältnis ihrer Querschnittsflächen gewählt sein. Wenn der größere Bereich um den Faktor 16 größer ist als der kleinere Bereich, kann die Beleuchtungsintensität des kleineren Bereiches um den Faktor 16 größer sein als die für den größeren Bereich.

Zur Beleuchtung der beiden Bereiche können jeweils separate Strahlungsquellen vorgesehen werden. Damit ist es besonders einfach möglich, die unterschiedlichen Intensitäten für die beiden zu beleuchtenden Bereiche bereitzustellen.

Die Beleuchtung kann mittels gepulster Beleuchtungsstrahlung realisiert werden. Bevorzugt werden dann beide Bereiche gleichzeitig beleuchtet. Sie können natürlich auch zeitlich alternierend beleuchtet werden.

Die Kameras können ein telezentrisches Objektiv aufweisen, wodurch der Meßbereich bzw. das Meßvolumen aufgrund des Telezentriebereiches über den Tiefenschärfebereich hinaus vergrößert werden kann.

Der Partikelstrom läuft bevorzugt quer zur Aufnahmerichtung der Kameras. Die Kameras können in Draufsicht und in Seitenansicht gesehen jeweils einen Winkel von 5 - 20° einschließen. In gleicher Weise können die Beleuchtungsrichtungen zur Beleuchtung der beiden Bereiche in Draufsicht und in Seitenansicht gesehen jeweils einen Winkel von 5 - 20° einschließen.

Zur Beleuchtung des kleineren Bereiches kann ein oberflächenemittierender Halbleiterlaser vorgesehen werden. Mit einem solchen Halbleiterlaser ist es möglich, auch bei kleinen zu beleuchtenden Bereichen hohe Beleuchtungsintensitäten bzw. hohe Leuchtdichten bereitzustellen. Der Halbleiterlaser kann insbesondere ein Array von mehreren Einzeldioden umfassen, deren ausgesandte Strahlungen sich durchmischen oder durch eine geeignete Optik durchmischt werden und als Beleuchtungsstrahlung für den kleineren Bereich eingesetzt werden. Damit ist eine gleichmäßige Beleuchtung trotz der hohen Intensität möglich.

Dem oberflächenemittierenden Halbleiterlaser kann eine Homogenisiereinrichtung nachgeordnet werden, um eine äußerst gleichmäßige Beleuchtung zu realisieren.

Die Kameras können als Digitalkameras mit einem zweidimensionalen Bildsensor ausgebildet werden.

Die erfindungsgemäße Vorrichtung und das erfindungsgemäße Verfahren sind insbesondere zur Bestimmung von Partikelgrößen rieselfähiger und/oder dispergierfähiger Materialien im Bereich von 0,7 µm bis 3 mm geeignet. Materialien können z.B. Zucker, Staubzucker, Salze, Kunststoffe, Zemente, Gipse, Feinsalze oder feines Kunststoffgranulat sein.

Es versteht sich, daß die vorstehen genannten und die nachstehend noch zu beschreibenden Merkmale der Erfindung nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend unter Bezugnahme auf die Zeichnung beispielhalber noch näher erläutert, wobei auch den Zeichnungen erfindungswesentliche Merkmale zu entnehmen sind. Es zeigen:
- Fig. 1: eine schematische Seitenansicht einer ersten Ausführungsform einer Vorrichtung zur Bestimmung von Partikelgröße und/oder Partikelform eines Partikelgemisches;
- Fig. 2: eine Draufsicht der Vorrichtung von Fig. 1;
- Fig. 3: eine vergrößerte Darstellung der Strahlungsquelle 11 von Fig. 1;
- Fig. 4: eine Darstellung zur Erläuterung der beiden Bereiche 21 und 22 der Meßzone;
- Fig. 5: eine schematische Seitenansicht einer zweiten Ausführungsform einer Vorrichtung zur Bestimmung von Partikelgröße und/oder Partikelform eines Partikelgemisches;
- Fig. 6: eine schematische Seitenansicht einer dritten Ausführungsform einer Vorrichtung zur Bestimmung von Partikelgröße und/oder Partikelform eines Partikelgemisches, und
- Fig. 7: eine schematische Ansicht eines Trockendispergiermoduls.

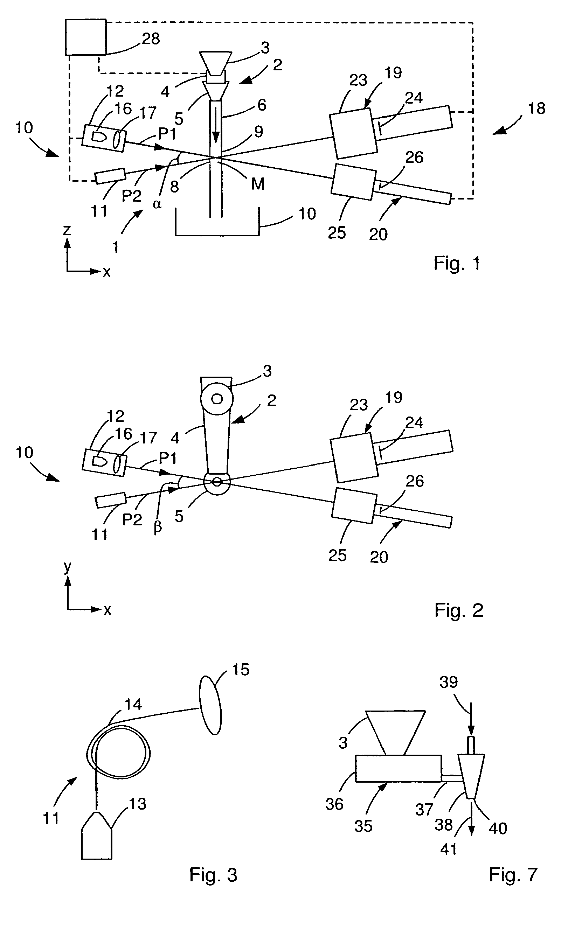

Bei der in Fig. 1 und 2 gezeigten Ausführungsform umfaßt die Vorrichtung 1 zum Bestimmen von Partikelgröße und/oder Partikelform eines Partikelgemisches eine Zuführeinrichtung 2, die das zu untersuchende Partikelgemisch einer Meßzone M zuführt und die einen Zuführtrichter 3, eine Förderrinne 4, einen weiteren Trichter 5, ein Partikelstromrohr 6 sowie einen Auffangbehälter 7 aufweist.

Das Partikelstromrohr 6 weist in den Abschnitten 8, 9 entweder Öffnungen auf oder ist zumindest in den Abschnitten 8 und 9 für die nachfolgend noch näher erläuterte Beleuchtungsstrahlung transparent, so daß im Rohr 6 zwischen den Abschnitten 8 und 9 die Meßzone M ist.

Ferner umfaßt die Vorrichtung 1 ein Beleuchtungsmodul 10 mit einer ersten und zweiten Strahlungsquelle 11, 12 auf.

Die erste Strahlungsquelle 11 enthält eine Laserdiode 13 des VCSEL-Typs (Vertical Cavity Surface Emitting Laser = Halbleiterlaser, bei dem das Licht senkrecht zur Ebene des Halbleiterchips abgestrahlt wird bzw. oberflächenemittierende Laserdiode), ein Lichtleitkabel 14 mit der Länge von 20 m sowie eine Mikrofokusoptik 15, wie schematisch in Fig. 3 dargestellt ist. Die Laserdiode 13 emittiert gepulste Laserstrahlung mit einer Wellenlänge von 850 nm. Die gepulste Laserstrahlung, deren äquivalente Dauerstrich-Leistung 150 mW beträgt, wird in das Lichtleitkabel 14 zur Homogenisierung eingekoppelt. Die aus dem Lichtleitkabel 14 austretende Laserstrahlung wird mittels der schematisch gezeigten Mikrofokusoptik 15 in die Meßzone M zwischen den beiden Abschnitten 8 und 9 fokussiert. Die Fokussierung ist so gewählt, daß der Fokusdurchmesser ca. 1,2 mm beträgt.

Die zweite Strahlungsquelle 12 umfaßt eine lichtemittierende Diode 16, die Strahlung mit der Wellenlänge von 625 nm emittiert, sowie eine integrierte Fokusoptik 17. Die zweite Strahlungsquelle 12 ist so ausgebildet, daß die erzeugte Strahlung in der Meßzone M fokussiert wird, wobei der Fokusdurchmesser ca. 3 mm beträgt. Die Leistungsaufnahme der zweiten Strahlungsquelle beträgt bei der beschriebenen Ausführungsform ca. 1 - 3 W.

Wie der Seitenansicht in Fig. 1 sowie der Draufsicht von Fig. 2 zu entnehmen ist, sind die beiden Strahlungsquellen 1 und 2 so angeordnet, daß die Beleuchtungsrichtungen (Pfeile P1 und P2) jeweils einen Winkel α, β von ca. 10° einschließen, wobei die beiden Foki der beiden Strahlungsquellen 11 und 12 in der Meßzone M zusammenfallen.

Es ist in einer Abwandlung auch möglich, daß bei der zweiten Strahlungsquelle 12 statt der integrierten Fokusoptik 17 eine (bevorzugt integrierte) Kollimationsoptik (nicht gezeigt) vorgesehen ist, die die Divergenz der von der Diode 16 emittierten Strahlung so verringert, daß der gesamte zu beleuchtende Bereich der Meßzone sicher beleuchtet wird. Insbesondere ist der Strahlquerschnitt in der Meßzone größer als der zu beleuchtende Bereich. Wenn der zu beleuchtende Bereich rechteckig mit der längeren Seite mit ca. 3 mm ist, kann die Strahlung der Diode 16 in der Meßzone M ebenfalls rechteckig sein, wobei die längere Seite z.B. 6 - 20 mm lang sein kann.

Ferner umfaßt die Vorrichtung 1 ein Detektionsmodul 18 mit einer ersten Kamera 19 und einer zweiten Kamera 20, wobei die erste Kamera 19 der ersten Strahlungsquelle 11 und die zweite Kamera 20 der zweiten Strahlungsquelle 12 gegenüber liegt. Die Detektionsrichtungen der beiden Kameras schließen somit in gleicher Weise wie die Beleuchtungsrichtungen der beiden Strahlungsquellen 11 und 12 jeweils in der Seitenansicht in Fig. 1 sowie in der Draufsicht von Fig. 2 den Winkel α bzw. β ein.

Die erste Kamera 19 weist ein telezentrisches Objektiv 23 auf und nimmt einen ersten Bereich 21 in der Meßzone M mit achtfacher Vergrößerung und einer numerischen Apertur von 0,2 auf. Die zweite Kamera 20 enthält ebenfalls ein telezentrisches Objektiv 25 und nimmt einen zweiten Bereich 22 in der Meßzone M mit einer Vergrößerung mit dem Faktor 2 und einer numerischen Apertur von 0,05 auf. Der erste Bereich 21 bzw. das Objektfeld der ersten Kamera 19 beträgt hier bei der genannten Vergrößerung 0,8 x 0,6 mm² und ist somit deutlich kleiner als der zweite Bereich bzw. das Objektfeld der zweiten Kamera 20, das hier 3,2 x 2,4 mm² beträgt. Bei diesen Vergrößerungen beträgt die Auflösung der ersten Kamera 19 0,75 µm pro Pixel des in der ersten Kamera 19 enthaltenen zweidimensionalen, digitalen Bildsensors 24, der eine effektive Pixelzahl von ca. 1000 x 800 Pixeln aufweist. Die Auflösung des zweidimensionalen, digitalen Bildsensors 26 der zweiten Kamera 20 beträgt bei der hier angegebenen Vergrößerung ca. 4 µm pro Pixel, wobei der Bildsensor 26 der zweiten Kamera 20 eine effektive Pixelanzahl von ca. 800 x 600 Pixeln aufweist. Mit den beiden Kameras können jeweils ca. 30 Bilder pro Sekunde aufgenommen werden.

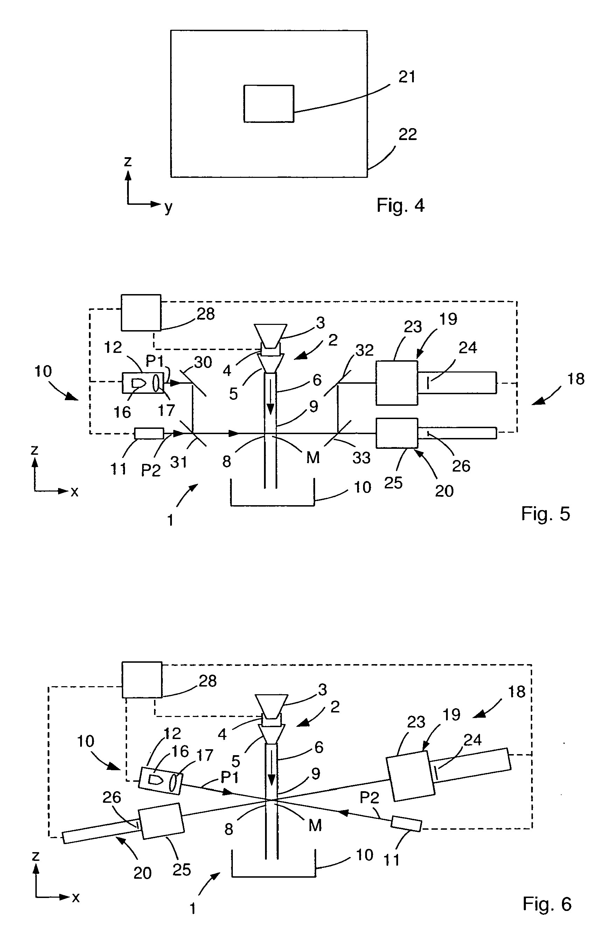

In Fig. 4 sind schematisch die beiden Bereiche 21 und 22 der Meßzone M dargestellt. Bei der hier beschriebenen Ausführungsform sind die Kameras 19 und 20 so justiert, daß der kleine Bereich 21 in der Mitte des großen Bereiches 22 liegt. Natürlich kann der kleine Bereich 21 an jeder anderen Position innerhalb des großen Bereiches 22 oder sogar außerhalb des großen Bereiches 22 liegen. Wesentlich ist, daß beide Bereiche 21 und 22 innerhalb der Meßzone M sind. Bei der Darstellung von Fig. 4 bewegt sich der Partikelstrom von oben nach unten (in -z-Richtung) durch die Bereiche 21 und 22, wobei die Kameras 19 und 20 natürlich auch noch die Partikel erfassen können, die in einem vorbestimmten Bereich vor oder hinter der Zeichenebene vorbeiströmen. Die Bereiche sind somit nicht nur zweidimensional, wie in Fig. 4 angedeutet ist, sondern erstrecken sich räumlich noch in die x-Richtung, so daß die Bereiche 21 und 22 nährungsweise quaderförmig ausgebildet sind, wobei sie die in Fig. 4 dargestellten Querschnittsflächen aufweisen.

Die Vorrichtung 1 umfaßt ferner ein Steuermodul 28, das mit der Zuführeinrichtung 2, dem Beleuchtungsmodul 10 sowie dem Detektionsmodul 18 verbunden ist, wie durch die gestrichelten Linien in Fig. 1 angedeutet ist. In Fig. 2 ist das Steuermodul 28 zur Vereinfachung der Darstellung nicht eingezeichnet. Das Steuermodul 28 dient einerseits zur Steuerung der Vorrichtung 1. Andererseits wird das Steuermodul 28 auch noch zur Auswertung der mittels der Kameras 19 und 20 gewonnenen Aufnahmen eingesetzt, um anhand der Aufnahmen die Partikelgröße und/oder Partikelform des Partikelgemisches zu bestimmen. Natürlich kann die Auswertung auch in einem separaten Auswertemodul (nicht gezeigt) durchgeführt werden, das nicht durch das Steuermodul verwirklicht ist.

Im Betrieb der Vorrichtung wird das Partikelgemisch über den Zuführtrichter 3 und die Förderrinne 4, die beispielsweise als Vibrationsrinne ausgebildet sein kann, zu dem weiteren Trichter 5 geführt, der die von der Förderrinne 4 geförderten Partikel dem Partikelstromrohr 6 zuführt, in dem die Partikel aufgrund der Schwerkraft nach unten fallen und einen Partikelstrom bilden.

Dieser Partikelstrom wird in der Meßzone M mittels des Beleuchtungsmoduls beleuchtet, wobei beide Strahlungsquellen 11 und 12 gepulst betrieben werden. Die beiden Strahlungsquellen 11 und 12 werden dabei so betrieben, daß sie gleichzeitig an- und ausgeschaltet werden. Die Pulsdauer beträgt ca. 100 - 200 ns, wobei pro Sekunde ca. 30 Pulse und somit 30 Aufnahmen erzeugt werden. Die beiden Strahlungsquellen 11 und 12 sind dabei so ausgelegt, daß die erste Strahlungsquelle 11 zur Beleuchtung des ersten Bereiches 21 und die zweite Strahlungsquelle 12 zur Beleuchtung des zweiten Bereiches 22 eingesetzt wird. Dadurch ist es möglich, den ersten Bereich 21 mit einer höheren Beleuchtungsintensität zu beleuchten als den zweiten Bereich 22, so daß selbst bei der relativ kurzen Pulsdauer in Verbindung mit der großen Vergrößerung der ersten Kamera 19 die Lichtmenge aus dem kleinen Bereich 21 ausreicht, um eine auswertbare Aufnahme zu erzeugen. Dazu wird die Beleuchtungsintensität des ersten Bereiches 21, der mit Strahlung der ersten Strahlungsquelle 11 beleuchtet wird, höher gewählt als die Beleuchtungsintensität für den zweiten Bereich 22. In erster Näherung kann die Beleuchtungsintensität im Verhältnis der Flächen der beiden Bereiche 22 und 21 höher gewählt werden. Bei dem hier beschriebenen Ausführungsbeispiel ist die Fläche des zweiten Bereiches 22 ca. 16 mal größer als die Fläche des ersten Bereiches 21, so daß die Beleuchtungsintensität für den ersten Bereich 21 16 mal größer gewählt wird als für den zweiten Bereich 22.

Durch das Vorsehen von zwei Kameras 19, 20 mit unterschiedlichen Vergrößerungen und den entsprechenden Strahlungsquellen 11, 12 zur Beleuchtung des Partikelstromes in der Meßzone M mit den notwendigen Intensität ist es möglich, Partikel im Größenbereich von 2,5 µm bis 1,5 mm oder auch bis 3 mm in Größe und/oder Form quantitativ zu bestimmen.

Die Objektive 23 und 25 der beiden Kameras 19 und 20 sind als telezentrische Objektive 23, 25 ausgebildet. Dies bringt den Vorteil mit sich, daß in einem im Vergleich zum Schärfentiefenbereich um z.B. den Faktor 2 bis 10 größeren Telezentriebereich die Partikel mit ihrer richtigen Größe aufgenommen werden können, obwohl sie nicht mehr völlig scharf darstellbar sind. Bei einem Schärfentiefenbereich von einigen 10 µm kommt man somit zu einem Meßbereich bzw. Meßvolumen von bis zu einigen 100 µm in Beobachtungsrichtung. Die Bereiche 21 und 22 von Fig. 4 erstrecken sich somit senkrecht zur Zeichenebene (x-Richtung) um bis zu einigen 100 µm.

Der zu messende Partikelstrom kann ein trockener Partikelstrom aus rieselfähigen und/oder dispergierfähigen Materialien sein. Es ist jedoch auch möglich, daß es sich um eine Suspension handelt, bei der die Partikel in einer Flüssigkeit verteilt sind. In diesem Fall ist der Partikelstrom ein Flüssigkeitsstrom, in dem die Partikel enthalten sind. Bei solch einem Flüssigkeitsstrom können Meßbereiche von 0,7 µm bis 150 µm oder 2 µm bis 1 mm realisiert werden.

In Fig. 5 ist eine Abwandlung der obigen Ausführungsform gezeigt, bei der gleiche Elemente mit gleichen Bezugszeichen bezeichnet sind und zu deren Beschreibung wird auf die obigen Ausführungen verwiesen. Im Unterschied zu der obigen Ausführungsform von Fig. 1 und 2 ist die Anordnung der Strahlungsquellen 11 und 12 sowie der Kameras 19 und 20 bei der Variante von Fig. 5 so gewählt, daß die Beleuchtungsrichtungen sowie die Aufnahmerichtungen jeweils zusammenfallen und senkrecht zur Fallrichtung des Partikelstroms sind. Dies wird dadurch erreicht, daß das Beleuchtungsmodul 10 einen Umlenkspiegel 30 sowie einen teiltransparenten Spiegel 31 und das Detektionsmodul 18 einen Umlenkspiegel 32 sowie einen teiltransparenten Spiegel 33 aufweist.

Bei den bisher beschriebenen Vorrichtungen liegen sich die Strahlungsquellen 11 und 12 sowie die Kameras 19 und 20 gegenüber, wobei der Partikelstrom dazwischen durchgeführt wird. Diese Art der Beleuchtung kann als Durchlichtbeleuchtung bezeichnet werden.

In Fig. 6 ist eine Abwandlung der Vorrichtung von Fig. 1 und 2 gezeigt, bei der die Strahlungsquelle 11, 12 und die zugehörige Kamera 19, 20 jeweils auf derselben Seite (in Fig. 6 also links oder rechts vom Partikelstromrohr 6) angeordnet sind. Diese Ausführungsform kann man auch als Auflichtbeleuchtung bezeichnen. Gleiche Elemente sind hier wiederum mit gleichen Bezugszeichen bezeichnet, wobei zu deren Beschreibung auf die obigen Ausführungen verwiesen wird.

Natürlich ist es möglich, mehr als zwei Kameras vorzusehen. Insbesondere kann für jede Kamera eine eigene Strahlungsquelle angeordnet sein. So kann beispielsweise bei der Ausführungsform von Fig. 1 noch senkrecht zur Zeichenebene gemessen werden. In diesem Fall kann oberhalb der Zeichenebene eine Strahlungsquelle (nicht gezeigt) angeordnet werden, deren Beleuchtungsrichtung senkrecht auf die Zeichenebene trifft. Unterhalb der Zeichenebene kann dann entsprechend eine weitere Kamera (nicht gezeigt) vorgesehen werden. Mit einer weiteren Kamera läßt sich der Dynamikbereich (der Bereich der zu messenden Partikelgrößen) erhöhen.

Die in Verbindung mit den obigen Ausführungsformen beschriebene Zuführeinrichtung 2 nützt die Schwerkraft aus, um den Partikelstrom in dem Rohr 6 zu erzeugen, da die Partikel durch das Rohr 6 fallen. Es ist jedoch auch möglich, die Zuführeinrichtung als Trockendispergiermodul 35 auszubilden, wie schematisch in Fig. 7 gezeigt ist. Bei dieser Ausgestaltung mündet der Zuführtrichter 3 in einen Vorratsbehälter 36, der über ein Verbindungsstück 37 mit einer Dispergierdüse 38 verbunden ist. Die Dispergierdüse 38 wird von oben mit Druckluft beaufschlagt, wie durch den Pfeil 39 angedeutet ist. Bei der hier beschriebenen Ausführungsform beträgt der Druck 0,8 bar. Im Betrieb ist das Trockendispergiermodul 35 so angeordnet, daß die untere Auslaßöffnung 40 des Trockendispergiermoduls 35 entweder in den weiteren Trichter 5 oder gleich direkt in den Partikelstromrohr 6 mündet, so daß bei den beschriebenen Ausführungsformen von Fig. 1, 2, 5 und 6 das Trockendispergiermodul 35 den Trichter 3, die Förderrinne 4 und gegebenenfalls den weiteren Trichter 5 ersetzt. Mit dem Trockendispergiermodul 35 können Durchströmgeschwindigkeiten (durch Pfeil 41 in Fig. 7 angedeutet) von bis zu 50 m/s erzeugt werden, so daß sich die Partikel im Partikelstrom mit dieser Geschwindigkeit durch die Meßzone M bewegen.

## Patentansprüche

1. Vorrichtung (1) zur Bestimmung von Partikelgröße und/oder Partikelform eines Partikelgemisches, mit
einer Zuführeinrichtung (2), die das Partikelgemisch als Partikelstrom durch eine Meßzone (M) führt,
einem Beleuchtungsmodul (10), das Beleuchtungsstrahlen (P1, P2) erzeugt und mit diesen die Meßzone (M) beleuchtet,
einem Detektionsmodul (18) mit einer ersten und einer zweiten Kamera (19, 20), die jeweils einen der entsprechenden Kamera (19, 20) zugeordneten Bereich (21, 22) der Meßzone (M) aufnehmen, wobei die Kameras (19, 20) die Bereiche (21, 22) mit unterschiedlichen Vergrößerungen aufnehmen,
und mit einem Auswertemodul (28), das anhand der Aufnahmen der Kameras (19, 20) die Partikelgröße und/oder Partikelform bestimmt,
wobei einer der beiden Bereiche (21, 22) kleiner ist als der andere Bereich und die erste Kamera (19) den kleineren Bereich (21) mit einer ersten Vergrößerung und die zweite Kamera (20) den größeren Bereich (22) mit einer zweiten Vergrößerung aufnimmt,
wobei die erste Vergrößerung höher ist als die zweite Vergrößerung,
**dadurch gekennzeichnet, daß** das Beleuchtungsmodul (10) so ausgebildet ist, daß es die beiden Bereiche (21, 22) mit unterschiedlichen Intensitäten beleuchtet, wobei der kleinere Bereich (21) mit größerer Intensität beleuchtet wird als der größere Bereich (22).

2. Vorrichtung nach Anspruch 1, **dadurch gekennzeichnet, daß** das Beleuchtungsmodul (10) für jeden zu beleuchtenden Bereich (21, 22) eine separate Strahlungsquelle (11, 12) aufweist.

3. Vorrichtung nach einem der obigen Ansprüche, daß das Beleuchtungsmodul (10) die Bereiche (21, 22) mit gepulsten Beleuchtungsstrahlen beleuchtet, bevorzugt jeweils gleichzeitig.

4. Vorrichtung nach einem der obigen Ansprüche, **dadurch gekennzeichnet, daß** zumindest eine der Kameras (19, 20) ein telezentrisches Objektiv (23, 25) aufweist und/oder daß der Partikelstrom quer zur Aufnahmerichtung der Kameras (19, 20) verläuft.

5. Vorrichtung nach einem der obigen Ansprüche, **dadurch gekennzeichnet, daß** die Aufnahmerichtungen der beiden Kameras (19, 20) in Draufsicht und in Seitenansicht gesehen jeweils einen Winkel von 5 - 20° einschließen und/oder daß die Beleuchtungsrichtungen (P1, P2) des Beleuchtungsmoduls (10) zur Beleuchtung der beiden Bereiche (21, 22) in Draufsicht und in Seitenansicht gesehen jeweils einen Winkel von 5 - 20 ° einschließen.

6. Vorrichtung nach einem der obigen Ansprüche, **dadurch gekennzeichnet, daß** das Beleuchtungsmodul (10) zur Beleuchtung des kleineren Bereichs (21) einen oberflächenemittierenden Halbleiterlaser aufweist und/oder daß die Kameras (19, 20) jeweils als Digitalkamera mit einem zweidimensionalen Bildsensor (24, 26) ausgebildet sind.

7. Verfahren zur Bestimmung von Partikelgröße und/oder Partikelform eines Partikelgemisches, bei dem
das Partikelgemisch als Partikelstrom durch eine Meßzone (M) geführt wird, die Meßzone (M) mit Beleuchtungsstrahlen (P1, P2) beleuchtet wird, mit einer ersten Kamera (19) ein erster Bereich (21) der Meßzone (M) mit einer ersten Vergrößerung aufgenommen wird, mit einer zweiten Kamera (20) ein zweiter Bereich (22) der Meßzone (M) mit einer zweiten Vergrößerung aufgenommen wird, wobei der erste Bereich (21) kleiner ist als der zweite Bereich (22) und die erste Vergrößerung höher ist als die zweite Vergrößerung, und bei dem anhand
der Aufnahmen der Kameras (19, 20) die Partikelgröße und/oder Partikelform bestimmt wird,
**dadurch gekennzeichnet, daß** die beiden Bereiche (21, 22) mit unterschiedlichen Intensitäten beleuchtet
werden, wobei der erste Bereich (21) mit größerer Intensität beleuchtet wird als der zweite Bereich (22).

8. Verfahren nach Anspruch 7, **dadurch gekennzeichnet, daß** für jeden zu beleuchtenden Bereich (21, 22) eine separate Strahlungsquelle (11, 12) vorgesehen wird.

9. Verfahren nach Anspruch 7 oder 8, **dadurch gekennzeichnet, daß** die Bereiche (21, 22) mit gepulsten Beleuchtungsstrahlen beleuchtet werden, bevorzugt jeweils gleichzeitig.

10. Verfahren nach einem der Ansprüche 7 bis 9, **dadurch gekennzeichnet, daß** zumindest eine der Kameras (19, 20) mit einem telezentrischen Objektiv (23, 25) vorgesehen wird und/oder daß der Partikelstrom quer zur Aufnahmerichtung der Kameras (19, 20) geführt wird.

11. Verfahren nach einem der Ansprüche 7 bis 11, **dadurch gekennzeichnet, daß** die Aufnahmerichtungen der beiden Kameras (19, 20)
in Draufsicht und in Seitenansicht gesehen jeweils einen Winkel von 5 - 20° einschließen und/oder daß die Beleuchtungsrichtungen zur Beleuchtung der beiden Bereiche (21, 22)
in Draufsicht und in Seitenansicht gesehen jeweils einen Winkel von 5 - 20° einschließen.

12. Verfahren nach einem der Ansprüche 7 bis 11, **dadurch gekennzeichnet, daß** zur Beleuchtung des kleineren Bereiches (21) ein oberflächenemittierender Halbleiterlaser vorgesehen wird und/oder daß die Kameras (19, 20) jeweils als Digitalkamera mit einem zweidimensionalen Bildsensor (24, 26) vorgesehen werden.

## Claims

1. An apparatus (1) for determining the particle size and/or particle shape of a mixture of particles, comprising
a feeding device (2), which passes the mixture of particles through a zone of measurement (M) as a particle flow,
an illumination module (10), which generates illumination beams (P1, P2) and illuminates the zone of measurement (M) with them,
a detection module (18) comprising a first and a second camera (19, 20), each recording an area (21, 22) of the zone of measurement (M) assigned to the respective camera (19, 20), said cameras (19, 20) recording the areas (21, 22) with different magnifications,
and comprising an evaluating module (28), which determines the particle size and/or particle shape on the basis of the recordings of the cameras (19, 20),
wherein one of the two areas (21, 22) is smaller than the other area and the first camera (19) records the smaller area (21) with a first magnification and the second camera (20) records the greater area (22) with a second magnification, wherein the first magnification is greater than the second magnification,
**characterized in that** the illumination module (10) is provided such that it illuminates the two areas (21, 22) with different intensities, wherein the smaller area (21) is illuminated with a greater intensity than the greater area (22).

2. The apparatus as claimed in claim 1, **characterized in that** the illumination module (10) comprises a separate source of radiation (11, 12) for each area (21, 22) to be illuminated.

3. The apparatus as claimed in any one of the above claims, **characterized in that** the illumination module (10) illuminates the areas (21, 22) with pulsed illumination beams, preferably at the same time in each case.

4. The apparatus as claimed in any one of the above claims, **characterized in that** at least one of the cameras (19, 20) comprises a telecentric objective (23, 25) and/or that the particle flow extends transversely to the recording direction of the cameras (19, 20).

5. The apparatus as claimed in any one of the above claims, **characterized in that** the recording directions of both cameras (19, 20) respectively enclose an angle of 5 - 20°, viewed in a top view and in a lateral view, and/or that the illumination directions (P1, P2) of the illumination module (10) for illumination of the two areas (21, 22) respectively enclose an angle of 5 - 20° as viewed in a top view and in a lateral view.

6. The apparatus as claimed in any one of the above claims, **characterized in that** the illumination module (10) for illumination of the smaller area (21) comprises a surface-emitting semiconductor laser and/or that the cameras (19, 20) are respectively provided as digital cameras comprising a two-dimensional image sensor (24, 26).

7. A method for determining the particle size and/or particle shape of a mixture of particles, wherein
the mixture of particles is passed through a zone of measurement (M) as a particle flow;
the zone of measurement (M) is illuminated by illumination beams (P1, P2);
a first area (21) of the zone of measurement (M) is recorded by a first camera (19) with a first magnification, a second area (22) of the zone of measurement (M) is recorded by a second camera (20) with a second magnification, wherein the first area (21) is smaller than the second area (22) and the first magnification is greater than the second magnification;
and wherein the particle size and/or particle shape is determined on the basis of the recordings made by the cameras (19, 20),
**characterized in that** the two areas (21, 22) are illuminated with different intensities, wherein the first area (21) is illuminated with a greater intensity than the second area (22).

8. The method as claimed in claim 7, **characterized in that** a separate source of radiation (11, 12) is provided for each area (21, 22) to be illuminated.

9. The method as claimed in claim 7 or 8, **characterized in that** the areas (21, 22) are illuminated with pulsed illumination beams, preferably at the same time in each case.

10. The method as claimed in any one of claims 7 to 9, **characterized in that** at least one of the cameras (19, 20) is provided with a telecentric objective (23, 25) and/or that the particle flow is guided transversely to the recording direction of the cameras (19, 20).

11. The method as claimed in any one of claims 7 to 11, **characterized in that** the recording directions of both cameras (19, 20) respectively enclose an angle of 5 - 20°, viewed in a top view or in a lateral view, and/or that the illumination directions for illumination of the two areas (21, 22) respectively enclose an angle of 5 - 20° as viewed in a top view and in a lateral view.

12. The method as claimed in any one of claims 7 to 11, **characterized in that** a surface-emitting semiconductor laser is provided for illumination of the smaller area (21) and/or that the cameras (19, 20) are respectively provided as digital cameras comprising a two-dimensional image sensor (24, 26).

## Revendications

1. Dispositif (1) de détermination de la taille et/ou de la forme de particules d'un mélange de particules, comprenant :
- un dispositif d'amenée (2) qui conduit le mélange de particules sous forme de flux de particules au travers d'une zone de mesure (M) ;
- un module d'éclairage (10) qui produit des rayons d'éclairage (P1, P2) et éclaire la zone de mesure (M) avec ceux-ci ;
- un module de détection (18) comprenant une première et une deuxième caméras (19, 20) qui filment chacune un secteur (21, 22) de la zone de mesure (M) attribué à la caméra (19, 20) correspondante, étant entendu que les caméras (19, 20) filment les secteurs (21, 22) avec des agrandissements différents ;
- et un module d'analyse (28) qui détermine la taille et/ou la forme des particules sur la base des images filmées par les caméras (19, 20) ; étant entendu qu'un des deux secteurs (21, 22) est plus petit que l'autre secteur et que la première caméra (19) filme le plus petit secteur (21) avec un premier agrandissement et la deuxième caméra (20) filme le plus grand secteur (22) avec un deuxième agrandissement ;
étant entendu que le premier agrandissement est plus élevé que le deuxième agrandissement ;
**caractérisé en ce que** le module d'éclairage (10) est conçu de telle sorte qu'il éclaire les deux secteurs (21, 22) avec des intensités différentes, étant entendu que le plus petit secteur (21) est éclairé avec une plus forte intensité que le plus grand secteur (22).

2. Dispositif selon la revendication 1, **caractérisé en ce que** le module d'éclairage (10) présente une source de rayonnement distincte (11, 12) pour chaque secteur (21, 22) à éclairer.

3. Dispositif selon l'une des revendications précédentes, **caractérisé en ce que** le module d'éclairage (10) éclaire les secteurs (21, 22) avec des rayons d'éclairage pulsés, de préférence à chaque fois en même temps.

4. Dispositif selon l'une des revendications précédentes, **caractérisé en ce qu'**au moins l'une des caméras (19, 20) présente un objectif télécentrique (23, 25) et/ou **en ce que** le flux de particules circule transversalement par rapport à la direction de filmage des caméras (19, 20).

5. Dispositif selon l'une des revendications précédentes, **caractérisé en ce que** les directions de filmage des deux caméras (19, 20), considérées dans une vue du dessus et dans une vue du côté, présentent chacune un angle de 5 à 20° et/ou **en ce que** les directions d'éclairage (P1, P2) du module d'éclairage (10), considérées dans une vue du dessus et dans une vue de côté, présentent chacune un angle de 5 à 20° aux fins de l'éclairage des deux secteurs (21, 22).

6. Dispositif selon l'une des revendications précédentes, **caractérisé en ce que** le module d'éclairage (10) présente un laser à semi-conducteur à émission de surface aux fins de l'éclairage du plus petit secteur (21) et/ou **en ce que** les caméras (19, 20) sont toutes deux conçues en tant que caméras numériques dotées d'un capteur d'images bidimensionnel (24, 26).

7. Procédé de détermination de la taille et/ou de la forme de particules d'un mélange de particules, dans lequel :
- le mélange de particules est conduit sous forme de flux de particules au travers d'une zone de mesure (M) ;
- la zone de mesure (M) est éclairée au moyen de rayons d'éclairage (P1, P2) ;
- un premier secteur (21) de la zone de mesure (M) est filmé au moyen d'une première caméra (19) avec un premier agrandissement et un deuxième secteur (22) de la zone de mesure (M) est filmé au moyen d'une deuxième caméra (20) avec un deuxième agrandissement, étant entendu que le premier secteur (21) est plus petit que le deuxième secteur (22) et que le premier agrandissement est plus élevé que le deuxième agrandissement ;
et dans lequel la taille et/ou la forme des particules est déterminée sur la base des images filmées par les caméras (19, 20) ;
**caractérisé en ce que** les deux secteurs (21, 22) sont éclairés avec des intensités différentes, étant entendu que le premier secteur (21) est éclairé avec une plus forte intensité que le deuxième secteur (22).

8. Procédé selon la revendication 7, **caractérisé en ce qu'**une source de rayonnement distincte (11, 12) est prévue pour chaque secteur (21, 22) à éclairer.

9. Procédé selon la revendication 7 ou 8, **caractérisé en ce que** les secteurs (21, 22) sont éclairés avec des rayons d'éclairage pulsés, de préférence à chaque fois en même temps.

10. Procédé selon l'une des revendications 7 à 9, **caractérisé en ce qu'**au moins l'une des caméras (19, 20) est pourvue d'un objectif télécentrique (23, 25) et/ou **en ce que** le flux de particules circule transversalement par rapport à la direction de filmage des caméras (19, 20).

11. Procédé selon l'une des revendications 7 à 11, **caractérisé en ce que** les directions de filmage des deux caméras (19, 20), considérées dans une vue du dessus et dans une vue du côté, présentent chacune un angle de 5 à 20° et/ou **en ce que** les directions d'éclairage (P1, P2), considérées dans une vue du dessus et dans une vue de côté, présentent chacune un angle de 5 à 20° aux fins de l'éclairage des deux secteurs (21, 22).

12. Procédé selon l'une des revendications 7 à 11, **caractérisé en ce qu'**un laser à semi-conducteur à émission de surface est prévu aux fins de l'éclairage du plus petit secteur (21) et/ou **en ce que** les caméras (19, 20) sont toutes deux conçues en tant que caméras numériques dotées d'un capteur d'images bidimensionnel (24, 26).
